(19) Europäisches Patentamt

European Patent Office

Office européen des brevets

(11) Publication number: **0 309 661 B1**

# EUROPEAN PATENT SPECIFICATION

(45) Date of publication of patent specification: **19.11.92**    (51) Int. Cl.5: **A21B 7/00**

(21) Application number: **88110802.1**

(22) Date of filing: **06.07.84**

(60) Publication number of the earlier application in accordance with Art.76 EPC: **0 131 264**

(54) **Kneading means for bread baking machine.**

(30) Priority: **08.07.83 JP 125251/83**
**02.12.83 JP 185758/83**

(43) Date of publication of application:
**05.04.89 Bulletin 89/14**

(45) Publication of the grant of the patent:
**19.11.92 Bulletin 92/47**

(84) Designated Contracting States:
**DE FR GB**

(56) References cited:
**WO-A-83/00800**
**FR-A- 541 293**
**FR-A- 2 443 206**
**US-A- 1 967 933**

(73) Proprietor: **HOSIDEN CORPORATION**
**4-33, Kitakyuhoji 1-chome**
**Yao-shi Osaka(JP)**

(72) Inventor: **Ojima, Shin**
**1116-32, Hattorigawa**
**Yao-shi Osaka(JP)**
Inventor: **Kamiuchi, Hideaki**
**1-77-19, Amamihigashi**
**Matsubara-shi Osaka(JP)**
Inventor: **Mine, Keiji**
**4-66, Midorigaoka Yao-sho**
**Osaka(JP)**

(74) Representative: **Blumbach Weser Bergen**
**Kramer Zwirner Hoffmann Patentanwälte**
**Radeckestrasse 43**
**W-8000 München 60(DE)**

## Description

The present invention relates to an automatic bread baking machine and, more particularly, to means for kneading ingredients of bread into dough for baking.

In bread baking the ingredients of bread are kneaded into dough, which is repeatedly fermented and degassed prior to baking. In this instance, as the kneading step proceeds, the dough temperature rises gradually. It has been found that stopping the kneading step when the dough temperature has reached about 28°C after kneading, for example, 15 minutes or so, gluten would be produced in the dough, ensuring baking lustrous, good bread. Prior to the kneading step the ingredients of bread and water to the mixed therein may preferably be held below 10°C, for instance. When ambient temperature is high as in summer, dough with gluten yielded therein can be obtained by keeping the ingredients of bread cool with ice or kneading them with cold water through use of some means.

In the case where such cold water or ice is not available and ambient temperature is above 24°C, the temperature of the ingredients of bread is also high correspondingly and the dough temperature will reach 28°C or so soon after starting the kneading step and will rise to 30°C or higher, or go up to 33°C or about 36°C. Once such temperature has been reached, further kneading of the dough will not produce gluten and will cause bubbles to form in the surface of the dough. Even if such dough is baked after being fermented and degassed as predetermined, no tasy bread can be obtained.

The document FR-A-541 293 discloses kneading means comprising a container for receiving the ingredients, a rotary shaft extending along the center line of the container and carrying a plurality of vanes with two diametrically opposite vanes being connected to the rotary shaft near to the bottom thereof, drive means for driving the rotary shaft from outside the container, and a plurality of fixed rods connected to the container wall and extending radially to the inside of the container, the fixed rods and the vanes being alternately arranged along the axial direction of the container.

The document FR-A-2 443 206 discloses kneading means in which a fork-like vane is arranged within a kneading container to be rotatable around an axis which is offset from the center of the container. Means for blowing hot or cold air into the container are provided to control the temperature of the dough. The blowing means are controlled by a temperature sensor disposed at a cover covering the kneading container.

It is therefore an object of the present invention to provide an automatic bread baking machine with dough kneading means with which it is possible to knead dough for producing therein gluten without the necessity of using cold water even in the case where ambient temperature is relatively high, say, 24°C.

This object is achieved with a bread baking machine as claimed.

The single figure is a sectional view showing an example of the kneading means according to the present invention.

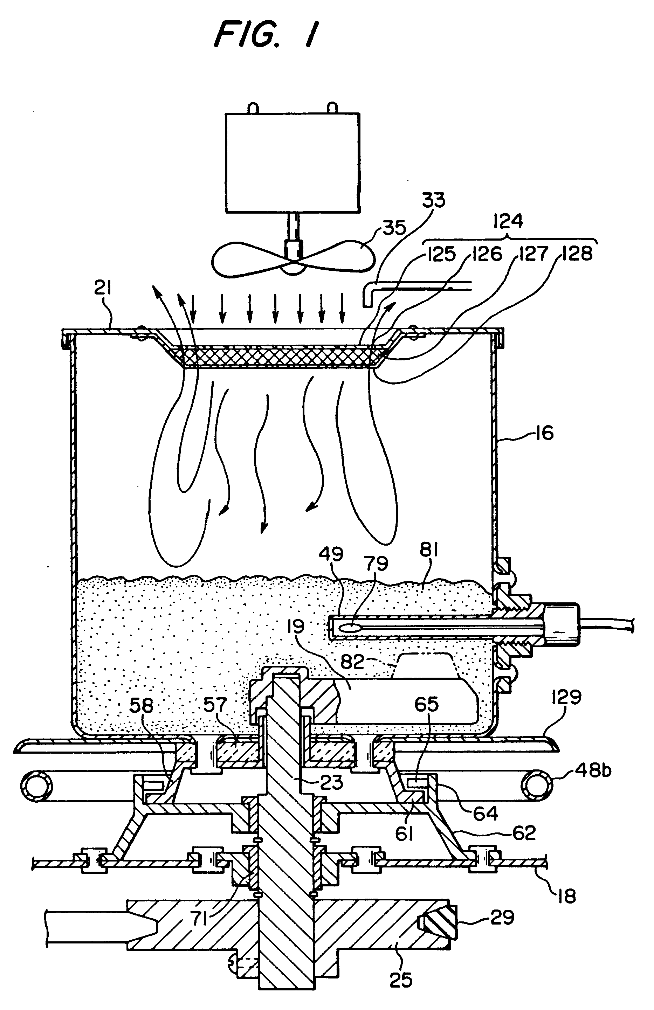

Fig. 1 illustrates, in section, an embodiment of the present invention. A rotary vane 19 is rotatably mounted in a container 16 on the bottom thereof, and ingredients of bread and water put in the container 16 are kneaded into dough by rotating the rotary vane 19. The top panel of the container 16 is formed as a lid 21 therefor. The rotary vane 19 has its rotary shaft 23 passed through the bottom panel of the container 16 centrally thereof. The lower end of the rotary shaft 23 extends down below a base plate 18 and carries at the projecting end a pully 25, on which a belt 29 is installed.

In the container 16 there is disposed a fixed rod 49 which extends above the circle of rotation of the rotary vane 19 in its radial direction from the outside thereof. In this embodiment the fixed rod 49 is mounted on the side panel of the container 16. The fixed rod 49 carries therein a temperature sensor 79.

A mount 58 is fixedly secured to the underside of the bottom panel of the container 16 with a heat-insulating layer 58 interposed therebetween. The mount 58 is in the form of a truncated cone and has an edge flange 61 extending fromn the periphery of its lower end. The edge flange 61 has a plurality of cuts at regular intervals, though not shown. On the base plate 18 a cradle 62 is mounted, which has a ring-shaped plate 64 raised about the periphery thereof for limiting movement of the edge flange 61 of the mount 58, and at least two pins 65 projects out inwardly of the limit plate 64. The pins 65 extend just above or in contact with the edge flange 61, limiting vertical movement of the mount 58. Since the edge flange 61 has the cuts as mentioned above, the mount 58 can be dismounted from or mounted on the cradle 62 by turning the mount 58 to bring its cuts into alignment with the pins 65.

The top panel 21 of the container 16 has a water-retaining opening 124. A shallow recess 125 is made in the central portion of the top panel 21 and many pores 126 are made in the bottom of the recess 125. A heat-resisting fiber 127 is mounted on the top panel 21 in a manner to close the pores 126. In this example, a doubling plate 128 having pores is attached to the lid (top panel) 21 in adjacent but spaced relation to the recess 125, and the fiber 127 is packed in the space defined between the recess 125 and the doubling plate 128. As the fiber 127, for example, heat-resisting glass fiber or tetrafluoroethylene is employed. Supplied onto the water-retaining opening 124 from a pipe 33, water drops into the container through the water-retaining opening 124 and at the same time water is impregnated into the fiber 127. Consequently, in the subsequent fermentation process the fiber 127, though spaced apart from dough 81, will produce substantially the same effect as would be obtained by covering the dough 81 with a wet cloth as in the past; therefore, the dough 81 will not get too dry or sticky. The water-retaining opening 124 is particularly suitable for use in baking French bread which needs relatively much dampness.

In the kneading step the situation may sometimes arise where the dough 81 twisted around the fixed rod 49 stays mainly on its upper side and remains out of the circle of rotation of the rotary vane 19, but this can be prevented by providing on the free end portion of the fixed rod 49 such a small projection 82 as indicated by the broken line so that it strikes against the dough on the underside of the rod 49, causing it to turn around the rod 49.

Disposed above the container 16 is a cooling fan 35. In the case where room temperature is about 30°C or higher and uncooled water is supplied into the container 16, the cooling fan 35 is driven a little after starting the mixing of the ingredients of bread with water. An air current by the cooling fan 35 passes through the water-retaining opening 124 and into the container 16, cooling the dough 81.

As described above, according to the kneading means of the present invention, for example, when temperature is above 30°C, the fan 35 is driven to blow air into the container 16 to cool it, holding the temperature of the dough 81 at about 28°C at the highest. By kneading the dough 81 for 25 to 28 minutes under such a temperature condition, gluten is produced and fine dough can be obtained. In the present invention, since the dough temperature, which is important for bread baking, is always sensed by the temperature sensor 79, it is also possible to effect control for maintaining the dough temperature at around 28°C by controlling the cooling fan 35 in accordance with the sensed temperature. Accordingly, even if ambient temperature is high, excellent dough can be obtained through use of the fan 35 with no particular need of using cooled water.

It will be apparent that many modifications and variations may be effected without departing from the scope of the novel concepts of the present invention, as defined in the the following claims.

## Claims

1. An automatic bread baking machine for domestic use including kneading means, comprising:

    a kneading container (16) for the ingredients of bread;

    a rotary vane (19) rotatably mounted in the kneading container;

    drive means for driving the rotary vane from outside the container;

    a single fixed rod (49) which is disposed near the circle of rotation of the rotary vane and extends thereabove from the side wall of the kneading container (16) in the radial direction thereof; and

    a cooling fan (35) for cooling the inside of the kneading container by blowing air thereinto.

2. The bread baking machine of claim 1, further including a temperature sensor for sensing the temperature of the ingredients of bread.

3. The bread baking machine of claim 2, wherein the temperature sensor is disposed in the fixed rod.

4. The bread baking machine of claim 2 or 3, wherein the temperature sensor is a sensor capable of sensing a temperature of about 28°C.

## Patentansprüche

1. Automatische Brotbackmaschine für den häuslichen Gebrauch mit einer Knetvorrichtung, umfassend:

    einen Knetbehälter (16) für die Brotzutaten;

    einen Drehflügel (19), der drehbar im Knetbehälter befestigt ist;

    eine Antriebseinrichtung zum Antrieb des Drehflügels von außerhalb des Behälters;

    eine einzige feste Stange (49), die in der Nähe des Drehkreises des Drehflügels angeordnet ist und sich über diesem von der Seitenwand des Knetbehälters (16) in radialer Richtung erstreckt; und

    einen Kühlventilator (35), um das Innere das Knetbehälters zu kühlen, indem Luft hineingeblasen wird.

2. Brotbackmaschine gemäß Anspruch 1, die weiters einen Temperatursensor zur Ermittlung der Temperatur der Brotzutaten aufweist.

3. Brotbackmaschine gemäß Anspruch 2, bei der der Temperatursensor in der festen Stange angeordnet ist.

**4.** Brotbackmaschine gemäß Anspruch 2 oder 3, bei der der Temperatursensor ein zur Ermittlung einer Temperatur von etwa 28°C geeigneter Sensor ist.

## Revendications

**1.** Dispositif de cuisson de pain automatique à usage domestique avec un moyen de pétrissage, comprenant :

un récipient de pétrissage (16) pour les ingrédients du pain;

une pale rotative (19) montée à rotation dans le récipient de pétrissage;

un moyen d'entraînement pour entraîner la paie rotative depuis l'extérieur du récipient;

une seule tige fixe (49) qui est disposée près du cercle de rotation de la paie rotative et s'étend au-dessus de celle-ci depuis la paroi latérale du récipient de pétrissage (16) dans la direction radiale; et

un ventilateur de refroidissement (35) pour refroidir l'intérieur du récipient de pétrissage en soufflant de l'air dans celui-ci.

**2.** Dispositif de cuisson de pain selon la revendication 1, comprenant en outre un détecteur de température pour détecter la température des ingrédients du pain.

**3.** Dispositif de cuisson de pain selon la revendication 2, dans lequel le détecteur de température est disposé dans la tige fixe.

**4.** Dispositif de cuisson de pain selon la revendication 2 ou 3, dans lequel le détecteur de température est un détecteur capable de déceler une température de 28°C environ.

*FIG. 1*